# EUROPEAN PATENT SPECIFICATION

(11) **EP 2 413 433 B1**
(45) Date of publication and mention of the grant of the patent: **05.12.2012**
(21) Application number: 10170897.2
(22) Date of filing: 27.07.2010
(51) Int. Cl.: H01R 13/595, H02G 3/06, H01R 13/506, H01R 13/512

(54) **Connector arrangement for an electrical lighting device**
Verbindungsanordnung für eine elektrische Beleuchtungsvorrichtung
Agencement de connecteur pour dispositif d'éclairage électrique

(43) Date of publication of application: 01.02.2012
(73) Proprietor: Helvar Oy Ab, 03600 Karkkila (FI)
(72) Inventor: Esa, Tapani Ojala, 03620 Karkkila (FI); Tapio, Kullervo Ruuska, 00770 Helsinki (FI)
(74) Representative: LEITZINGER OY

(56) References cited:
- EP-A1- 0 013 673
- EP-A1- 0 572 131
- DE-U1- 8 031 567
- DE-U1- 29 614 814
- DE-U1-202009 000 899
- FR-A- 1 306 856

## Description

### The field of the invention

For example lighting devices need compatible and practical connectors to fulfil, not only functionality and safety requirements, but also requirements set by standards.

### The state of the art

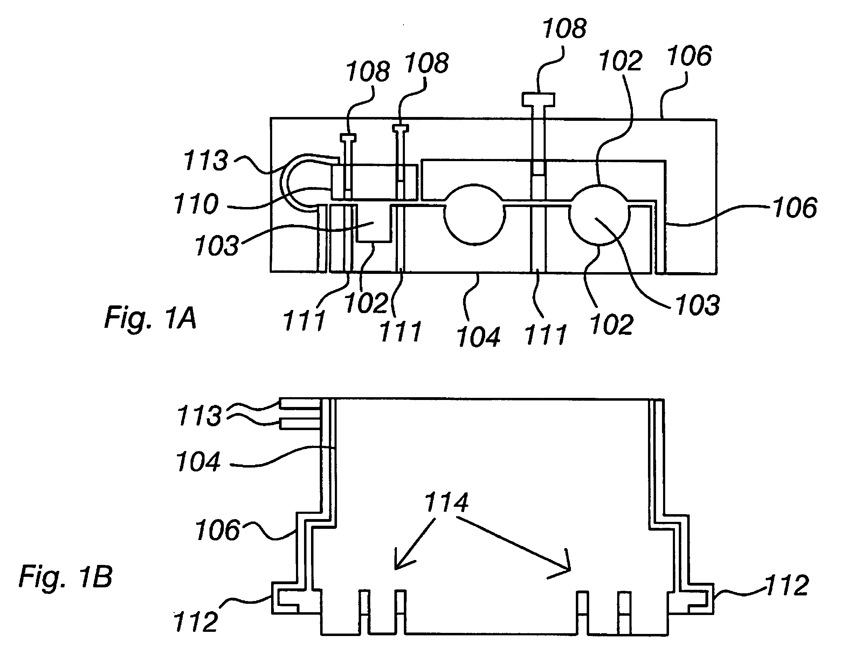

As the closest prior art is presented a clamp part described in figures 1A-1B. Cables are set to grooves 102 of a lower part 104 of the clamp part. After that a cover part 106 is attached to the lower part 104 by screws 108. Cables are connected through holes 103 of the clamp part to input holes of a connector part (not shown). Reference number 111 describes holes for the screws.

A function of said screws 108 is also to try to fix the cables stationary into the grooves 102. This function meets certain problems especially when different cable sizes need to be used, because one screw between two cables doesn't work properly when said two cables have substantially different diameters. As shown in figure 1A, this problem has been tried to solve by a separate fixing structure 110, which uses two screws 108 to try to fix one cable to the groove 102. Reference number 113 in figs 1A-1B describes a spring part, which has been attached to said separate fixing structure 110. Thus the problem of the prior art is complexity in the structure when different cable sizes need to be used. The problem is also uncertainty in stationary fixing when only one screw 108 is used to fix two cables even if they have same diameters, as shown in figure 1A.

The prior art clamp part is attached to the connector part by attachment means 112, 114 (figure 1B), which are structured to accomplish an attachment with only one size of the connector part. Thus one size of the connector part forms an independent pair with the attachment means 112, 114 of the clamp part, and it is not taken into the consideration the use of the same clamp part with connector parts of different sizes.

In document FR1306856 A (Licentia GmbH) is presented a connector arrangement for connecting cables to an electrical lighting device, the connector arrangement comprising a connector part, which has input holes for connecting cables. The connector arrangement comprises a cable clamp part for protecting the connections of cables.

In document DE8031567 U1 (Hermann Kleinhuis GmbH Co Kg) is presented a cable connection shell through a casing wall of an electrical device, and into the cable connection shell can be brought a protection plate, which is installed by a clamping screw.

In document DE29614814 U1 (Robert Bosch GmbH) is presented a pinching arrangement of electrical cables inside a casing, the pinching arrangement comprising a pinching element, which surrounds the cable. The pinching element is pinched to the cable together with a module, which also can be pinched to the cable. The module can be fixed into an input opening, which is open at one side of the pinching arrangement.

Document EP0013673 A1 (Cooper Ind Inc) presents a pinching arrangement of an electrical cable, which is carried via a cylindrical hole for example through a wall. The cable is installed to said hole by using a clamping screw, which is formed for example from elastic material, and has grooves at the other end of the screw. The screw is attached to a pressure plate by using said grooves to form pressure force by the pressure plate to the cable. That way the cable is pinched in the hole by the pressure plate.

Document EP0572131 A1 (Everest Medical Corp [US]) presents a bipolar scissors for insertion into a laparoscope, trocar or endoscope for effecting electrocoagulation of blood and tissue during laparoscopic or other endoscopic surgery. The scissors blades at the distal tip of the instrument perform cutting of the tissue by mechanical shearing action. The two blades are effectively insulated from one another along their entire lengths, and the two blades are arranged into a pivoting relationship to one another by a conductive or a non-conductive screw.

### Short description of the invention

The object of the invention is to accomplish a connector arrangement, which ensures substantially easy and sure assembly of the connector, and which assembly also allows the use of the same clamp part size with connector parts of different sizes. This is achieved by a connector arrangement for connecting cables to an electrical lighting device, the connector arrangement comprising a connector part, which comprises input holes for connecting cables, a cable clamp part for protecting the connections of cables, the cable clamp part comprising an installation part, which is attached to the connector part, and the installation part and the connector part comprising compatible first attachment means for said attachment. The installation part comprises guiding means for the cables at a substantially long distance from the input holes. The cable clamp part comprises a locking part, which is attached to the connector part and to the installation part, the locking part and the connector part comprising compatible second attachment means for said attachment, and the locking part and the installation part comprising compatible third attachment means for said attachment. The installation part comprises a locking screw slot for each cable, and the connector arrangement comprises the locking part comprising a non-conductive locking screw for each cable, and the locking screw is screwed through the locking screw slot to substantially lock the cable, which is guided between the guiding means to the input hole of the connector part, and said locking is performed for each cable of the connector arrangement.

The invention is based on a proper attachment of a cable clamp part and a connector part, on a utilization of guiding means for the cables and a non-conductive locking screw for each cable to substantially lock the cable, which is guided between the guiding means to the input hole of the connector part, and said locking is performed for each cable of the connector arrangement. The invention is also based on the utilization of the integrable first, second and third attachment means, non-dependent from the connector part size, which attachment means comprise compatible attachment structures between the connector part, installation part and locking part accomplishing a sure and stable fixing between the parts.

The benefit of the invention is that a practical, user-friendly clamp part has been accomplished, which ensures sure and safety cable and/or wire connections according to the standard requirements in connectors, which may have different sizes.

### Short description of figures

- Figures 1A-1B: present a cable clamp part according to the prior art.
- Figures 2A-2C: present a cable clamp according to a preferred embodiment of the present invention.
- Figure 3: presents a more detailed picture of the second attachment means.

### Detailed description of the invention

The object of the invention is a user-friendly connector arrangement, which also without no doubt fulfils the requirements of standards, for example IEC standards. The important function of cable clamp structure is to protect connections of cables 100 in the connector arrangement.

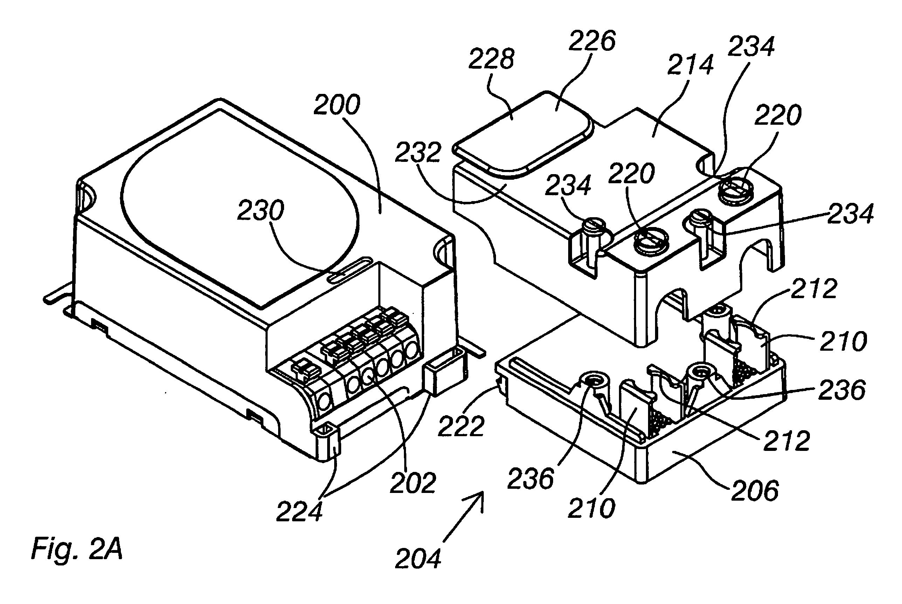

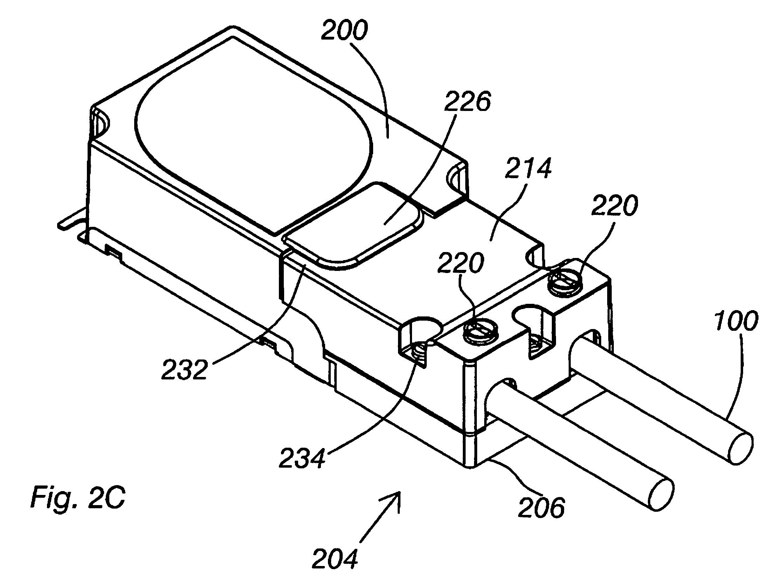

In figures 2A-2C is presented a cable clamp according to a preferred embodiment of the present invention. In figure 2A is presented a connector part and separately the clamp part 204, which comprises an installation part 206 and a locking part 214. The size of connector part 204 presented in figure 2A is only exemplary size, because the same clamp part 204 can be used also with connector parts, which have other sizes than the one presented in figure 1.

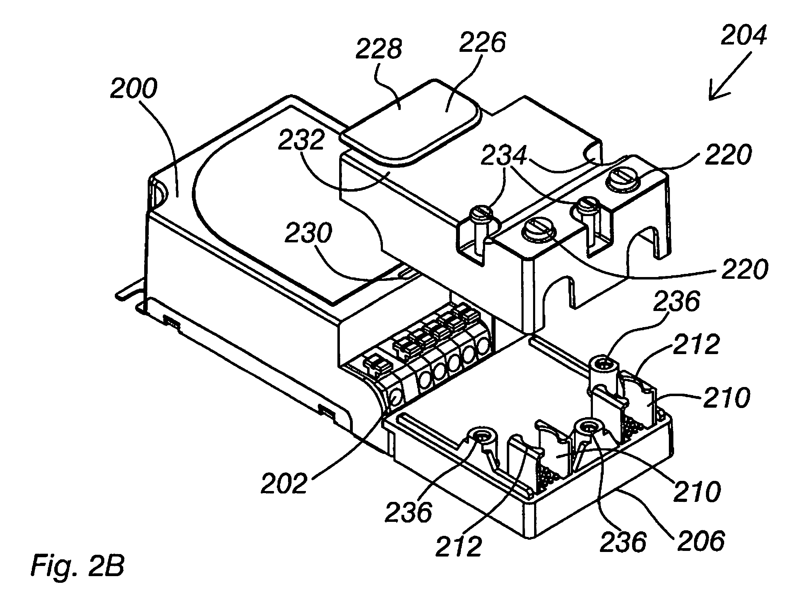

The connector arrangement presented in figures 2A-2C can be used for connecting cables 100 to an electrical lighting device, which is for example a HID (High Intensity Discharge) lamp. In figure 2B is presented the installation part 206 attached to the connector part 200. This attachment is accomplished with compatible first attachment means both in the connector part 200 and the installation part 206, as presented in figures 2A-2B. Said compatible first attachment means comprise for example clips 222 in the installation part 206 and capsules 224 for the clips in the connector part 200. As presented in figure 2B the installation part 206 comprises guiding means 210 for the cables at a substantially long distance from the input holes 202 of the connector part 200, to which input holes 202 the cables 100 are connected. Said substantially long distance between the guiding means 210 and the input holes 202 is best shown in figure 2B. Said substantially long distance between parts 210 and 202 is preferably about two centimetres or more centimetres. The function of said long distance is to make the installation of the cables 100 easier, when guided between the guiding means 210 to the input holes 202 of the connector part 200. Said long distance provides more space for the fingers or for some installation tool, for example pincers, to set every cable 100 to the right input hole 202 of the connector part 200. It is also important to notice, that one cable 100 may comprise more than one wires, which can be connected to different input holes 202 of the connector part 200 by utilizing the installation space between the guiding means 210 and the input holes 202 of the connector part 200 with fingers or pincers, for example, as described.

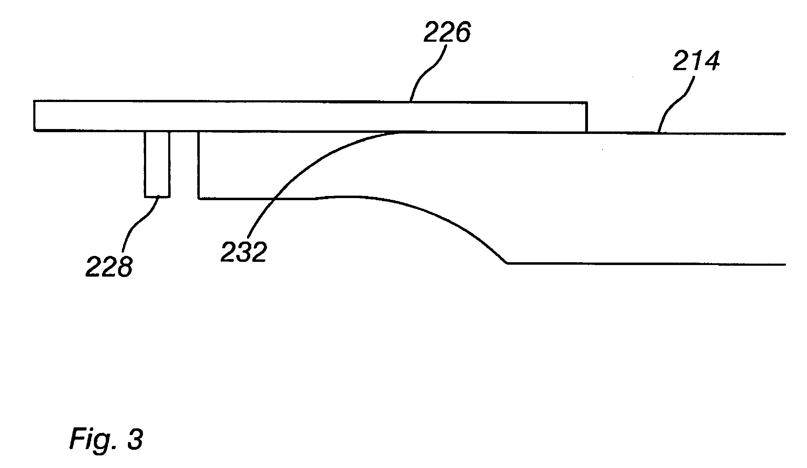

As presented in figures 2A-2C the cable clamp part comprises as a second main part the locking part 214, which is attached to the connector part 200 and to the installation part 206. Thus the locking part 214 and the connector part 200 comprise compatible second attachment means for said attachment (Figs 2A-C, Figs 3). Preferably these second attachment means are in the locking part a wing part 226 and a protruding part 228, which is preferably fixed to the wing part, and a cavity 230 for the protruding part 228 in the connector part 200. Also the second attachment means preferably comprise a supporting plane 232 for the wing part 226 in the locking part 214 for establishing a substantially stable attachment. These parts are presented more detailed in figure 3. The locking part 214 and the installation part 206 comprise compatible third attachment means for the attachment between them. These attachment means are preferably locking screws 234 and screw holes 236 for establishing stable fixings between parts 206, 214 of the connector arrangement.

The locking part 214 comprises a non-conductive locking screw 220 for each cable 100, which are set between the guiding means 210 of the installation part 206, which also comprises a locking screw slot 212 for each cable 100. Thus the locking screw 220 is screwed through its screwing hole in the locking part 214 and via the slot 212 preferably in the guiding means 210 to fix the cable tightly enough, and this is performed for each cable 100 connected via the input hole 202 of the connector arrangement. It is also a crucial feature of this cable fixing arrangement according to the invention that there will not exist a conductive interface as a result of said even very tight cable fixing. This is achieved by a non-conductive locking screw 220, which is preferably a plastic screw. The non-conductive locking screw 220 can be also made of a ceramic material or of some other material comprising substantially good isolation features.

The slot 212 described above is beneficial in accomplishing the stable cable or wire fixing according to the presented invention.

The benefits of the invention are even better emphasized, when the preferred connector arrangement described in figures 2A-C comprises cables 100, which have different diameters. Also the modular clamp part according to the invention makes possible to use the same clamp part size with connector parts having different sizes. This modular feature is accomplished especially by the first and second compatible attachment means according to the invention.

Although the invention has been presented in reference to the attached figures and specification, the invention is by no means limited to those, as the invention is subject to variations within the scope allowed for by the claims.

## Claims

1. A connector arrangement for connecting cables (100) to an electrical lighting device, the connector arrangement comprising a connector part (200), which comprises input holes (202) for connecting cables (100), a cable clamp part (204) for protecting the connections of cables (100), the cable clamp part (204) comprising an installation part (206), which is attached to the connector part (200), and the installation part (206) and the connector part (200) comprising compatible first attachment means for said attachment, the installation part comprises guiding means (210) for the cables at a substantially long distance from the input holes (202), and the cable clamp part comprising a locking part (214), which is attached to the connector part (200) and to the installation part (206), the locking part (214) and the connector part (200) comprising compatible second attachment means for said attachment, and the locking part (214) and the installation part (206) comprising compatible third attachment means for said attachment, **characterized by**, that the installation part (206) comprises a locking screw slot (212) for each cable (100), and the connector arrangement comprises the locking part (214) comprising a non-conductive locking screw (220) for each cable (100), and the locking screw (220) is screwed through the locking screw slot (212) to substantially lock the cable (100), which is guided between the guiding means (210) to the input hole (202) of the connector part (200), and said locking is performed for each cable (100) of the connector arrangement.

2. A connector arrangement in accordance with claim 1, **characterized by**, that the arrangement comprises as a non-conductive locking screw (220) a plastic screw.

3. A connector arrangement in accordance with claim 1, **characterized by**, that the arrangement comprises as a non-conductive locking screw (220) a ceramic screw.

4. A connector arrangement in accordance with claim 1, **characterized by**, that the arrangement comprises as said compatible first attachment means a clip (222) and a capsule (224) for the clip.

5. A connector arrangement in accordance with claim 1, **characterized by**, that the arrangement comprises as said compatible second attachment means a wing part (226) and a protruding part (228) in the locking part (214) and a cavity (230) for the protruding part (228) and a supporting plane (232) for the wing part (226) in the locking part (200) for establishing a substantially stable attachment.

6. A connector arrangement in accordance with claim 1, **characterized by**, that the arrangement comprises cables (100), which have different diameters.

7. A connector arrangement in accordance with claim 1, **characterized by**, that the arrangement comprises as said third compatible attachment means locking screws (234) and screw holes (236) for establishing stable fixings between parts (206, 214) of the connector arrangement.

## Patentansprüche

1. Verbindungsanordnung zum Anschließen von Kabeln (100) an eine elektrische Leuchtvorrichtung, wobei die Verbindungsanordnung einen Verbindungsteil (200), der Eingangslöcher (202) zum Anschließen von Kabeln (100) umfasst, und einen Kabelklemmenteil (204) zum Schützen der Anschlüsse der Kabel (100) umfasst, wobei der Kabelklemmenteil (204) einen Montageteil (206) umfasst, der an dem Verbindungsteil (200) befestigt ist, und wobei der Montageteil (206) und der Verbindungsteil (200) kompatible erste Befestigungsmittel für die Befestigung umfassen, der Montageteil Mittel (210) zum Führen der Kabel in einen im Wesentlichen großen Abstand von den Eingangslöchern (202) umfasst, und der Kabelklemmenteil einen Sicherungsteil (214) umfasst, der an dem Verbindungsteil (200) und an dem Montageteil (206) befestigt ist, wobei der Sicherungsteil (214) und der Verbindungsteil (200) kompatible zweite Befestigungsmittel für die Befestigung umfassen, und wobei der Sicherungsteil (214) und der Montageteil (206) kompatible dritte Befestigungsmittel für die Befestigung umfassen, **dadurch gekennzeichnet, dass** der Montageteil (206) eine Sicherungsschraubennute (212) für jedes Kabel (100) umfasst, und die Verbindungsanordnung den Sicherungsteil (214) umfasst, der eine nicht leitende Sicherungsschraube (220) für jedes Kabel (100) umfasst, und die Sicherungsschraube (220) durch die Sicherungsschraubennute (212) geschraubt wird, um das Kabel (100) im Wesentlichen zu sichern, das zwischen den Führungsmitteln (210) zum Eingangsloch (202) des Verbindungsteils (200) geführt wird, und das Sichern für jedes Kabel (100) der Verbindungsanordnung ausgeführt wird.

2. Verbindungsanordnung nach Anspruch 1, **dadurch gekennzeichnet, dass** die Anordnung als nicht leitende Sicherungsschraube (220) eine Kunststoffschraube umfasst.

3. Verbindungsanordnung nach Anspruch 1, **dadurch gekennzeichnet, dass** die Anordnung als nicht leitende Sicherungsschraube (220) eine Keramikschraube umfasst.

4. Verbindungsanordnung nach Anspruch 1, **dadurch gekennzeichnet, dass** die Anordnung als erste kompatible Befestigungsmittel einen Halter (222) und eine Kapsel (224) für den Halter umfasst.

5. Verbindungsanordnung nach Anspruch 1, **dadurch gekennzeichnet, dass** die Anordnung als kompatibles zweites Befestigungsmittel einen Flügelteil (226) und einen vorstehenden Teil (228) in dem Sicherungsteil (214) und einen Hohlraum (230) für den vorstehenden Teil (228) und eine Auflageebene (232) für den Flügelteil (226) in dem Sicherungsteil (200) umfasst, um eine im Wesentlichen stabile Befestigung herzustellen.

6. Verbindungsanordnung nach Anspruch 1, **dadurch gekennzeichnet, dass** die Anordnung Kabel (100) umfasst, die verschiedene Durchmesser aufweisen.

7. Verbindungsanordnung nach Anspruch 1, **dadurch gekennzeichnet, dass** die Anordnung als dritte kompatible Befestigungsmittel Sicherungsschrauben (234) und Schraubenlöcher (236) zum Herstellen von stabilen Halterungen zwischen den Teilen (206, 214) der Verbindungsanordnung umfasst.

## Revendications

1. Agencement de connecteur pour connecter des câbles (100) à un dispositif d'éclairage électrique, l'agencement de connecteur comprenant une partie de connecteur (200), qui comprend des trous d'entrée (202) pour connecter des câbles (100), une partie de collier de câble (204) pour protéger les connexions de câbles (100), la partie de collier de câble (204) comprenant une partie d'installation (206), qui est attachée à la partie de connecteur (200), et la partie d'installation (206) et la partie de connecteur (200) comprenant un premier moyen d'attachement compatible pour ledit attachement, la partie d'installation comprend des moyens de guidage (210) pour les câbles à une distance sensiblement longue des trous d'entrée (202), et la partie de collier de câble comprenant une partie de verrouillage (214), qui est attachée à la partie de connecteur (200) et à la partie d'installation (206), la partie de verrouillage (214) et la partie de connecteur (200) comprenant un deuxième moyen d'attachement compatible pour ledit attachement, et la partie de verrouillage (214) et la partie d'installation (206) comprenant un troisième moyen d'attachement compatible pour ledit attachement, **caractérisé en ce que** la partie d'installation (206) comprend une fente de vis de verrouillage (212) pour chaque câble (100), et l'agencement de connecteur comprend la partie de verrouillage (214) comprenant une vis de verrouillage non conductrice (220) pour chaque câble (100), et la vis de verrouillage (220) est vissée à travers la fente de vis de verrouillage (212) pour verrouiller sensiblement le câble (100), qui est guidé entre les moyens de guidage (210) vers le trou d'entrée (202) de la partie de connecteur (200), et ledit verrouillage est effectué pour chaque câble (100) de l'agencement de connecteur.

2. Agencement de connecteur selon la revendication 1, **caractérisé en ce que** l'agencement comprend une vis en plastique en tant que vis de verrouillage non conductrice (220).

3. Agencement de connecteur selon la revendication 1, **caractérisé en ce que** l'agencement comprend une vis en céramique en tant que vis de verrouillage non conductrice (220).

4. Agencement de connecteur selon la revendication 1, **caractérisé en ce que** l'agencement comprend, en tant que ledit premier moyen d'attachement compatible, une pince (222) et une capsule (224) pour la pince.

5. Agencement de connecteur selon la revendication 1, **caractérisé en ce que** l'agencement comprend, en tant que ledit deuxième moyen d'attachement compatible, une partie d'aile (226) et une partie de saillie (228) dans la partie de verrouillage (214) et une cavité (230) pour la partie de saillie (228) et un plan de support (232) pour la partie d'aile (226) dans la partie de verrouillage (200) pour établir un attachement sensiblement stable.

6. Agencement de connecteur selon la revendication 1, **caractérisé en ce que** l'agencement comprend des câbles (100) de diamètres différents.

7. Agencement de connecteur selon la revendication 1, **caractérisé en ce que** l'agencement comprend, en tant que ledit troisième moyen d'attachement compatible, des vis de verrouillage (234) et des trous de vis (236) pour établir des fixations stables entre des parties (206, 214) de l'agencement de connecteur.
